## Europäisches Patentamt

## European Patent Office

## Office européen des brevets

(19)

(11) Veröffentlichungsnummer : **0 389 808 B1**

(12) **EUROPÄISCHE PATENTSCHRIFT**

(45) Veröffentlichungstag der Patentschrift :
**14.10.92 Patentblatt 92/42**

(51) Int. Cl.⁵ : **B66C 21/00,** B66C 1/34

(21) Anmeldenummer : **90103658.2**

(22) Anmeldetag : **26.02.90**

(54) Vorrichtung zum selbsttätigen Ausklinken eines auf einem Zugseil mit einer Gleitöse verschiebbar angeordneten Gleithakens.

(30) Priorität : **25.03.89 DE 3909920**

(43) Veröffentlichungstag der Anmeldung :
**03.10.90 Patentblatt 90/40**

(45) Bekanntmachung des Hinweises auf die
Patenterteilung :
**14.10.92 Patentblatt 92/42**

(84) Benannte Vertragsstaaten :
**AT BE CH DE DK ES FR GB GR IT LI LU NL SE**

(56) Entgegenhaltungen :
**WO-A-83/01432
CH-A- 593 204
FR-A- 614 792
FR-A- 2 310 953**

(56) Entgegenhaltungen :
**GB-A- 278 602
US-A- 1 530 244
US-A- 1 693 208
US-A- 1 775 941
US-A- 2 750 060**

(73) Patentinhaber : **Werner, Johann
Ehranger Strasse 102a
W-5500 Trier-Ehrang (DE)**

(72) Erfinder : **Heilig, Alfred
Waldstrasse 22
W-7704 Gailingen (DE)**

(74) Vertreter : **Schönherr, Wolfgang et al
Patentanwälte Wolfgang Schönherr Dipl.-Ing.
Karl-Heinz Serwe Hawstrasse 28
W-5500 Trier (DE)**

## Beschreibung

Die Erfindung betrifft eine Vorrichtung zum selbsttätigen Ausklinken eines auf einem Zugseil mit einer Gleitöse verschiebbar angeordneten Gleithakens, der mit seinem Haken und dem Zugseil eine Schlaufe zum Halten eines Stammholzbündels od. dgl. bildet, wobei das Zugseil über einen auf einem Tragseil angeordneten Laufwagen geführt ist und der Gleithaken wirksam mit einer mit dem Laufwagen zusammenwirkenden Auslösevorrichtung verbunden ist.

Mit Hilfe derartiger Vorrichtung (US-A-1693 208) werden insbesondere an Hängen liegende Baumstämme vorgeliefert. Zunächst werden mit Hilfe des Zugseiles die einzelnen Baumstämme in einer Gasse gesammelt, anschließend in der aus Gleithaken und Seil gebildeten Schlaufe festgelegt und dann vorgeliefert.

Sind die Baumstämme bis zum gewünschten Ort vorgeliefert, so muß der Gleithaken gelöst werden, wodurch sich die Schlaufe öffnet und die Baumstämme freigegeben werden. Der Laufwagen kann dann wieder zurückgezogen werden und ein weiteres Stammholzbündel vorgeliefert werden.

Bei einer bekannten derartigen Vorrichtung weist der Gleithaken einen langen Hebelarm auf, der gelenkig mit einer auf dem Zugseil gleitenden Öse verbunden ist. Der lange Hebelarm ist wirksam mit den Querstreben einer leiterartigen Steuerkette verbunden, die ein Auslösen des Hakens in einer bestimmten vorgegebenen Höhe bewirkt. Diese bekannte Vorrichtung weist den Nachteil auf, daß insbesondere die Steuerkette und der lange Hebelarm oftmals beim Vorliefern von Baumstämmen im Wald an Ästen od. dgl. hängenbleiben und daher oftmals eine zu frühe Auslösung erfolgt.

Außerdem ist bei dieser bekannten Vorrichtung eine Auslösung des Hakens vorgesehen, bevor die Baumstämme auf dem Boden angelangt sind. Dies ist jedoch durch das unkontrollierte Herabfallen der Baumstämme nicht ganz ungefährlich. Werden jedoch die Baumstämme zunächst auf dem Boden abgelegt, so besteht die Gefahr, daß sich die Baumstämme auf den langen Hebel des Gleithakens legen und somit eine Auslösung unmöglich machen.

Bekannt sind ferner Vorrichtungen mit einer zum Öffnen des Hakens schwenkbaren Hakenzunge, die über einen Seilzug od. dgl. vom Bediener betätigbar ist (US-A-1775 941). Davon abgesehen, daß diese zu öffnenden Hakenzungen bei dem gegebenen rauhen Einsatz im Wald, insbesondere beim Vorliefern von Holzstämmen sehr störanfällig sind, weisen diese bekannten Vorrichtungen den Nachteil auf, daß beim Ablegen der Holzstämme auf den Boden nicht gewährleistet werden kann, daß die Holzstämme auf dem zu öffnenden Haken zu liegen kommen und so ein Öffnen verhindern.

Die Aufgabe der Erfindung besteht daher darin, eine Vorrichtung der eingangs genannten Art derart weiterzubilden, daß ein selbsttätiges Ausklinken des Gleithakens auf einfache und sichere Weise möglich ist, wobei diese Vorrichtung außerdem einfach und robust und wenig störanfällig ist.

Diese Aufgabe wird dadurch gelöst, daß die Auslösevorrichtung eine im Laufwagen angeordnete Federseilzugtrommel und ein Ausklinkseil vorgegebener Länge hat, dessen eines Ende mit dem Gleithaken und dessen anderes Ende mit der Federseilzugtrommel verbunden ist.

Vorteilhaft ist das eine Ende des Ausklinkseiles lösbar mit dem Gleithaken verbunden. Vorzugsweise weist der Gleithaken nahe seinem Hakenende eine Öse auf, in die das eine Ende des Ausklinkseiles einhängbar ist.

Vorteilhaft ist das freie Ende des Gleithakens abgerundet ausgebildet.

Die Erfindung ist in den Zeichnungen beispielhaft dargestellt. Es zeigt:

Fig. 1 die Vorrichtung in Transportstellung,

Fig. 2 die Vorrichtung kurz vor dem Ausklinken des Gleithakens und

Fig. 3 einen Gleithaken in vergrößerter Darstellung.

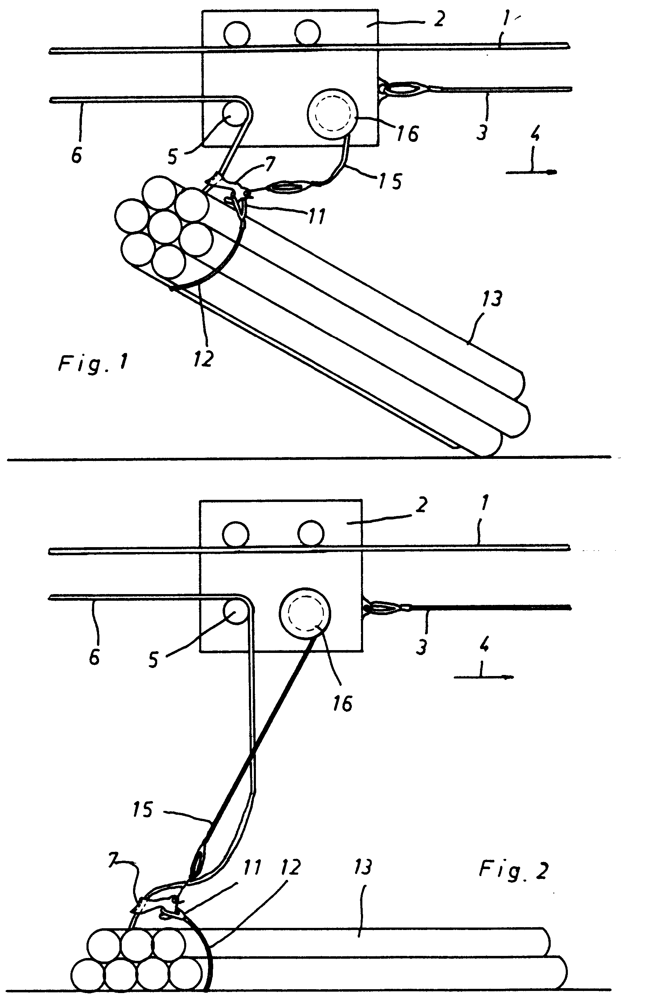

Nach den Fig. 1 und 2 ist auf einem Tragseil (1) ein Laufwagen (2) verschiebbar angeordnet. Der Laufwagen ist mit einem Rückholseil (3) verbunden, mit dem der Laufwagen in Richtung des mit (4) bezeichneten Pfeiles bewegt werden kann.

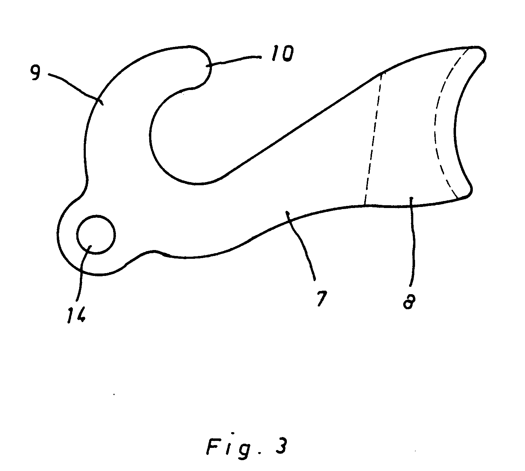

Im Laufwagen ist über eine Rolle (5) ein Zugseil (6) geführt, auf dem ein Gleithaken (7) mit seiner Gleitöse (8) (vgl. Fig. 3) verschiebbar geführt ist. Der Gleithaken (7) weist einen Haken (9) auf (Fig. 3), dessen freies Ende (10) abgerundet ausgebildet ist. Der Haken (9) des Gleithakens (7) ist in einer Endschlaufe (11) des Zugseiles (6) derart eingehängt, daß eine Schlaufe (12) gebildet ist, die ein Stammholzbündel (13) trägt.

Wie die Fig. 1 bis 3 weiter zeigen, hat der Gleithaken (7) nahe seinem Hakenende (9) eine öse (14), in die das eine Ende eines Ausklinkseiles (15) vorgegebener Länge eingehängt ist, dessen anderes Ende auf einer am Laufwagen (2) angeordneten Federzugseiltrommel (16) befestigt ist. Die Federzugseiltrommel (16) ist derart vorgespannt, daß das Ausklinkseil (15) stets gestrafft gehalten ist.

In der in Fig. 1 dargestellten Transportstellung ist das Zugseil (6) angezogen, so daß sich die Schlaufe (12) aus Gleithaken (7) und Zugseil (6) zusammenzieht und das Stammholzbündel (13) fest und sicher hält.

Wird am Vorlieferort entsprechend der Fig. 2 das Zugseil (6) abgelassen, so sinkt das Stammholzbündel (13) zu Boden und die Schlaufe (12) wird entlastet. Gleichzeitig wird das Ausklinkseil (15) von der Federseilzugtrommel (16) abgezogen, wie dies in Fig. 2 dargestellt ist. Wird das Ausklinkseil (15) vollständig von der Federseilzugtrommel (16) abgerollt, was auch bei nicht ausreichender Fallhöhe durch Bewegung des Laufwagens (2) mit Hilfe des Rückholseils (3) in Richtung des mit (4) bezeichneten Pfeils bewirkt werden kann, so wird durch das mit seinem anderen Ende auf der Federseilzugtrommel (16) befestigte Ausklinkseil (15) der Gleithaken aus der Endschlaufe (11) des Zugseiles herausgezogen, so daß die Vorrichtung zu einem neuen Einsatz bereit ist.

## Patentansprüche

1. Vorrichtung zum selbsttätigen Ausklinken eines auf einem Zugseil mit einer Gleitöse verschiebbar angeordneten Gleithakens, der mit seinem Haken und dem Zugseil eine Schlaufe zum Halten eines Stammholzbündels od. dgl. bildet, wobei das Zugseil über einen auf einem Tragseil angeordneten Laufwagen geführt ist und der Gleithaken wirksam mit einer mit dem Laufwagen zusammenwirkenden Auslösevorrichtung verbunden ist, dadurch gekennzeichnet, daß die Auslösevorrichtung eine am Laufwagen (2) angeordnete Federseilzugtrommel (16) und ein Ausklinkseil (15) in vorgegebener Länge hat, dessen eines Ende mit dem Gleithaken (7) und dessen andere Ende mit der Federseilzugtrommel verbunden ist.

2. Vorrichtung nach Anspruch 1, dadurch gekennzeichnet, daß das eine Ende des Ausklinkseiles (15) lösbar mit dem Gleithaken (7) verbunden ist.

3. Vorrichtung nach Anspruch 2, dadurch gekennzeichnet, daß der Gleithaken (7) nahe seinem Hakenende (9) eine Öse (14) aufweist, in die das eine Ende des Ausklinkseiles (15) einhängbar ist.

4. Vorrichtung nach einem der Ansprüche 1 bis 3, dadurch gekennzeichnet, daß das freie Ende (10) des Hakens (9) des Gleithakens (7) abgerundet ausgebildet ist.

## Claims

1: Automatic releasing device for a slide hook, which is displaceably arranged with a slidimg eye on a traction cable and which forms, by means of its hook and the traction cable, a loop for holding a bundle of tree trunks or the like, whereby the traction cable is guided via a trolley, which is arranged on a support cable, and the slide hook is effectively connected to a release mechanism which co-acts with the trolley, **characterised in that** the releasing device comprises a sprung cable drum (16) arranged on the trolley (2) and a release cable (15) of a specified length, the one end of which is connected to the slide hook (7), and the other end of which is connected to the sprung cable drum.

2: Device according to claim 1, **characterised in that** the one end of the release cable (15) is detachably connected to the slide hook (7).

3: Device according to claim 2, **characterised in that** the slide hook (7) has, near the end of its hook (9), an eye (14) into which the one end of the release cable (15) is engaged.

4: Device according to one of claims 1 to 3, **characterised in that** the free end (1∅) of the hook (9) of the slide hook (7) is rounded off.

## Revendications

1. Dispositif de déverrouillage automatique d'un crochet pouvant glisser sur un câble de traction qui forme avec son crochet et ledit câble une boucle destinée à maintenir un paquet de troncs d'arbres ou analogues, le câble de traction passant sur un chariot mobile par rapport à un câble porteur, tandis que le crochet est prévu coulissant et relié de façon efficace avec un dispositif de déverrouillage qui coopère avec ledit chariot mobile, caractérisé en ce que le dispositif de déverrouillage comporte un tambour (16) de rappel élastique d'un câble disposé sur le chariot mobile (2) ainsi qu'un câble de déverrouillage (15) de longueur déterminée dont l'une des extrémités est reliée au crochet coulissant (7) tandis que son autre extrémité est reliée audit tambour de rappel élastique.

2. Dispositif selon la revendication 1, caractérisé en ce que l'une des extrémités du câble de déverrouillage (15) est reliée de façon amovible avec le crochet coulissant (7).

3. Dispositif selon la revendication 2, caractérisé en ce que le crochet coulissant (7) présente prés de son bras d'accrochage (9) un oeillet (14) dans lequel l'une des extrémités du câble de déverrouillage (15) peut être accrochée.

4. Dispositif selon l'une quelconque des revendications 1 à 3, caractérisé en ce que l'extrémité libre (10) du bras d'accrochage (9) du crochet coulissant (7) se termine par un arrondi.

Fig. 1

Fig. 2

Fig. 3